# EUROPÄISCHE PATENTSCHRIFT

(11) **EP 4 091 869 B1**
(45) Veröffentlichungstag und Bekanntmachung des Hinweises auf die Patenterteilung: **11.06.2025**
(21) Anmeldenummer: 22167783.4
(22) Anmeldetag: 12.04.2022
(51) Int. Cl.: B60L 58/13, B60L 58/16

(54) **VERFAHREN UND ANORDNUNG ZUR LADE-/ENTLADESTEUERUNG EINES HOCHVOLT-BATTERIESYSTEMS**
METHOD AND ARRANGEMENT FOR CONTROLLING THE CHARGING AND DISCHARGING OF A HIGH-VOLTAGE BATTERY SYSTEM
PROCÉDÉ ET AGENCEMENT DE COMMANDE DESTINÉS À LA CHARGE/DÉCHARGE D'UN SYSTÈME DE BATTERIE HAUTE TENSION

(30) Priorität: 18.05.2021 DE 102021205058
(43) Veröffentlichungstag der Anmeldung: 23.11.2022
(73) Patentinhaber: VOLKSWAGEN AG, 38440 Wolfsburg (DE)
(72) Erfinder: Misir, Dr. Onur, 30455 Hannover (DE); Weber, Dr. Bastian, 30161 Hannover (DE); Tillmann, Dr. Stefan, 38518 Gifhorn (DE); Umland, Lars, 38154 Königslutter (DE)

(56) Entgegenhaltungen:
- EP-A1- 2 502 774
- EP-A1- 2 662 949
- WO-A1-2013/055830
- US-A1- 2011 202 217
- US-A1- 2020 108 726

## Beschreibung

Die Erfindung betrifft ein Verfahren zur Lade-/Entladesteuerung eines Hochvolt-Batteriesystems nach dem Oberbegriff des Anspruches 1 sowie eine Anordnung zur Durchführung des Verfahrens nach dem Oberbegriff des Anspruches 7. Die Erfindung ist insbesondere in einem rein batteriebetriebenen Fahrzeug oder einem teilweise batteriebetriebenen Fahrzeug, insbesondere einem Plug-in-Hybrid-Fahrzeug anwendbar.

Hochvolt-Batteriesysteme werden zur Energiespeicherung für viele Zwecke eingesetzt, insbesondere dort, wo ein netzunabhängiger Betrieb notwendig oder gewünscht ist. Man findet derartige Energiespeicher zum Beispiel in Autos, Schiffen und Flugzeugen, wo sie die zum Starten des Motors nötige Energie liefern. In den letzten Jahren enorm an Bedeutung gewonnen hat die Verwendung als Traktionsbatterien für teilelektrisch oder vollelektrisch betriebene Fahrzeuge. Auch elektrisch betriebene Kleingeräte, wie elektrische Werkzeuge, Smartphones und Kameras werden mittels Akkumulatoren - also wiederaufladbarer Batterien - mit Energie versorgt. Weiter gewinnen wiederaufladbare Energiespeicher des hier in Rede stehenden Typs zunehmend als Puffer-Speicher an Bedeutung, um Wind- oder Solarenergie zunächst zu speichern und zu einem späteren Zeitpunkt in das Stromnetz einzuspeisen.

Je nach Anwendungsbereich kommen unterschiedliche Akkumulator-Typen zum Einsatz, die sich insbesondere durch die zur Energiespeicherung genutzten Materialien unterscheiden. Als Starterbatterien für Autos sind beispielsweise Blei-Akkus gebräuchlich. Tragbare elektrische oder elektronische Geräte weisen üblicherweise Lithium-Ionen-Akkus auf. Lithium basierte Energiespeicher findet man zumeist auch in teilelektrisch oder vollelektrisch betriebenen Fahrzeugen.

Allen bekannten Akkumulator-Typen ist gemeinsam, dass sie einer Alterung unterliegen. Ein wesentlicher Faktor für die Alterung eines wiederaufladbaren Energiespeichers des Akkumulator-Typs ist neben der Temperatur, die der Energiespeicher annimmt, der Spannungsbereich innerhalb dem der Energiespeicher betrieben wird. Was die Temperatur angeht, so werden bei großtechnischen Anwendungen (Pufferspeicher) oder bei einer Anwendung in einem Fahrzeug als Traktionsbatterie üblicherweise Vorkehrungen getroffen, dergestalt dass die Temperatur nicht unter ein vorgegebenes Niveau abfällt, beziehungsweise nicht über ein vorgegebenes Niveau ansteigt. Hinsichtlich des Spannungsbereichs innerhalb dessen der Akkumulator betrieben wird, führen sowohl eine zu hohe Aufladung des Akkumulators (hohe Spannung), als auch eine zu tiefe Entladung (niedrige Spannung) zu einer starken Reduktion der Lebensdauer. Die Hersteller geben deshalb üblicherweise einen zulässigen Ladezustands-Bereich (SoC, engl. State of Charge) an, innerhalb dessen der Akkumulator zu betreiben ist, um eine garantierte Zyklen-Anzahl oder eine garantierte kalendarische Alterung zu erreichen. Je nach Akkumulator-Typ ist der zulässige Ladezustands-Bereich unterschiedlich, bei Lithium-Ionen-Akkus wird zum Beispiel der mittlere Ladungsbereich zwischen 10% und 80% genutzt, bei Blei-Akkus der obere Ladungsbereich zwischen 60% und 100%.

Wie aus dem Vorstehenden ersichtlich, ergibt sich insbesondere bei der Anwendung von Hochvolt-Batteriesystemen in vielen Fällen ein Zielkonflikt zwischen dem Bestreben eine möglichst geringe Alterung des Energiespeichers zu erreichen und der Maßgabe, den Energiespeicher aus Kostengründen möglichst klein zu halten. Dies ist beispielsweise bei Traktionsbatterien von elektrisch oder teilelektrisch betriebenen Fahrzeugen der Fall, weil eine alterungsoptimierte Einschränkung des Ladezustands-Bereichs durch Einführung eines entsprechend eingeengten SoC-Fensters, also des Bereiches der für die Nutzung der Ladung durch eine entsprechende Steuerung des Ladevorgangs bzw. des Entladevorgangs zugelassen wird, sich unmittelbar auf die erzielbare Reichweite auswirkt. Auch bei anderen Anwendungen von Hochvolt-Batteriesystemen besteht dieser Zielkonflikt, die Batterie bei möglichst geringer Alterung möglichst klein zu halten.

Um dem Problem der Alterung zu begegnen, wurde bisher versucht, im Wege eines Kompromisses Hochvolt-Batteriesystemen unter Inkaufnahme eines höheren Preises größer auszulegen, also Hochvoltbatterien mit einer höheren Brutto-Kapazität einzusetzen und durch ein fest vorgegebenes SoC-Fensters in einem alterungsoptimierten Bereich zu betreiben. Eine entsprechend geringere Netto-Kapazität wurde dabei in Kauf genommen.

Eine derartige statische Einschränkung der Netto-Kapazität erweist sich in vielen Fällen als stark einschränkend, beispielsweise beim realen Betrieb von Personenkraftfahrzeugen mit Elektroantrieb. Um solche Fahrzeuge möglichst flexibel betreiben zu können, wird in der US 8 970 173 B2 deshalb ein Verfahren zum Einstellen des Betriebsmodus eines Elektrofahrzeugs vorgeschlagen, wobei der Betriebsmodus aus einer Vielzahl von Betriebsmodi ausgewählt wird. Die Vielzahl von Betriebsmodi umfasst dabei mindestens einen Batterielebensdauermodus und einen Standardmodus, wobei der Batterielebensdauermodus bezüglich der Auswahl von Betriebs- und Ladeparametern so konfiguriert ist, dass der Batteriezustand und die Batterielebensdauer gegenüber der Fahrzeugreichweite und/ oder der Fahrzeugleistung betont sind. Das System umfasst ein Wärmemanagementsystem zum Halten des Batteriepacks des Fahrzeugs innerhalb eines von mehreren Temperaturbereichen und ein Ladesystem zum Laden des Batteriepacks des Fahrzeugs auf einen von mehreren minimalen und maximalen SoC-Pegeln. Es werden also an mehrere vorgegebene Betriebsmodi angepasste SoC-Fenster vorgehalten und durch Betätigung einer Wählvorrichtung durch den Fahrer eingestellt. Eine solche Wahlmöglichkeit schafft zwar eine größere Flexibilität in der Verwendung eines Fahrzeugs, überträgt aber die Verantwortung für eine möglichst hohe Lebensdauer der Hochvoltbatterie auf den Fahrer.

Eine andere Vorgehensweise wird in der EP 3 050 739 A1 vorgeschlagen. Das dort beschriebene Verfahren sieht vor, dass zur Steuerung und/ oder Regelung mindestens eines einen Alterungszustand eines elektrischen Energiespeichers eines Kraftfahrzeugs beeinflussenden Betriebsparameters des elektrischen Energiespeichers, ein Ist-Alterungszustands des elektrischen Energiespeichers und ein Soll-Alterungszustand ermittelt werden. In einem Vergleich des Ist-Alterungszustands mit dem Soll-Alterungszustand wird ermittelt, ob der Ist-Alterungszustand eine erhöhte Alterung im Vergleich zum Soll-Alterungszustand oder eine geringere Alterung zeigt. Ist der Ist-Alterungszustand gegenüber dem Soll-Alterungszustand erhöht, wird ein Betriebsparameterbereich so angepasst, dass der Betrieb des elektrischen Energiespeichers innerhalb des angepassten Betriebsparameterbereichs mit verringerter Alterungsgeschwindigkeit erfolgt. Ist der Ist-Alterungszustand gegenüber dem Soll-Alterungszustand geringer, kann eine Anpassung des Betriebsparameterbereiches in der Weise erfolgen, dass der Betrieb des elektrischen Energiespeichers innerhalb des angepassten Betriebsparameterbereichs mit erhöhter Alterungsgeschwindigkeit erfolgt. Der angepasste Betriebsparameterbereich kann dabei gemäß einer Ausführungsform das Ladezustandsfenster (SoC-Fenster) des Energiespeichers sein.

Mit dieser Vorgehensweise wird zwar eine alterungsoptimierte Betriebsweise eines Energiespeichers möglich, der Ist-Alterungszustand des Energiespeichers kann aber nur mit viel Aufwand und nur ungenau ermittelt werden. Darüber hinaus bleibt der Umstand unbeachtet, dass in vielen Betriebsfällen die für den Betrieb benötigte Ladung zwischen zwei Aufladevorgängen sehr viel geringer ist, als es ein durch den Ist-Alterungszustand geregeltes SoC-Fenster vorgibt.

Aus der WO 2013/055830 A1 sind ein gattungsgemäßes Verfahren und eine gattungsgemäße Anordnung bekannt. Die US 2011/202217 A1 offenbart eine Elektrofahrzeugausrüstung für netzintegrierte Fahrzeuge. Aus der EP 2 502 774 A1 sind ein Fahrzeug und ein Steuerungsverfahren für das Fahrzeug bekannt. Die EP 2 662 949 A1 offenbart eine Ladesteuervorrichtung, ein Ladesteuerverfahren und ein Programm dafür. Aus der US 2020/108726 A1 ist eine variable Ladestrategie für Plug-in-Elektrofahrzeuge bekannt.

Die Aufgabe der Erfindung besteht darin, ein Verfahren bereitzustellen, bei dem das SoC-Fenster dynamisch so festgelegt ist, dass die zwischen zwei Ladevorgängen tatsächlich benötigte Ladung zur Verfügung steht. Unter der tatsächlich benötigten Ladung soll dabei die Ladung verstanden werden, die - gegebenenfalls unter Einschluss einer Sicherheitsreserve - notwendig ist, eine mittels der gespeicherten Ladung zu erledigenden Aufgabe zu bewältigen. Weiter gehört es zur Aufgabe, eine Anordnung zur Durchführung des Verfahrens anzugeben.

Gelöst wird die Aufgabe durch die Merkmale des Anspruches 1 oder 7. Bevorzugte Weiterbildungen der Erfindung sind in den Unteransprüchen offenbart.

Ausgegangen wird von einer implementierten Lade-/Entladesteuerung eines Hochvolt-Batteriesystems, die es erlaubt zur Alterungsoptimierung der Batterie unterschiedliche Ladezustands-Bereiche durch Einführung entsprechend eingeengter SoC-Fensters einzustellen.

Im realen Betrieb von Hochvolt-Batteriesystemen hat sich herausgestellt, dass in der Mehrzahl der Fälle zwischen zwei Lademöglichkeiten nur ein sehr kleiner Teil der Netto-Kapazität aufgebraucht wird, wobei diese tatsächlich benötigte Kapazität aber erheblichen Schwankungen unterworfen sein kann. Ausgehend von dieser Überlegung wurde gefunden, dass sich für eine große Anzahl von Anwendungsfällen die tatsächlich benötigte Kapazität unter Einbeziehen einer Reihe von Parametern prädiktiv abschätzen lässt. Es wird daher zur Lösung der Aufgabe ein Verfahren vorgeschlagen, bei dem in einem einer Aufladung vorgelagerten Prozess wenigstens eine Kenngröße ermittelt wird, die die bis zur nächsten Aufladung benötigte nutzbare Kapazität der Batterie prognostiziert. Die wenigstens eine Kenngröße wird sodann in eine benötigte nutzbare Kapazität übergeführt und aus dieser ein den Alterungszustand der Batterie optimierendes SoC-Fenster bestimmt. Den Alterungszustand der Batterie optimierend bedeutet hier, dass das SoC-Fenster in einer Vielzahl von Fällen kleiner einem maximal zulässigen SoC-Fenster (SoC-Fₘₐₓ₎ ist und innerhalb des maximal zulässigen SoC-Fenster (SoC-Fₘₐₓ) liegt. Mittels der Lade-/Entladesteuerung wird das SoC-Fenster eingestellt und die Batterie innerhalb es durch das SoC-Fenster vorgegebenen Bereich geladen. Im Betrieb steuert die Lade-/Entladesteuerung das Entladen der Batterie so, dass der Ladezustand innerhalb des durch das SoC-Fenster vorgegebenen Ladezustandsbereichs bleibt.

Der Vorteil des erfindungsgemäßen Verfahrens besteht darin, dass der untere Wert des SoC-Fenster UG (SoC-F) und der obere Wert des SoC-Fensters OG (SoC-F) dynamisch, durch prädiktive Abschätzung der zwischen zwei Ladevorgängen benötigten Kapazität, immer auf Werte eingestellt sind, die die tatsächlich benötigte Kapazität der Batterie abdeckt. Daraus resultiert, dass in der Mehrzahl der Fälle, auf Grund einer benötigten Kapazität, die kleiner ist als die zulässige Netto-Kapazität, der untere Wert des Soll-SoC-Fensters größer eingestellt wird, als der minimal zulässige untere Wert des maximal zulässigen SoC-Fensters und der obere Wert es Soll-SoC-Fensters kleiner eingestellt wird, als der maximal zulässige obere Wert des maximal zulässigen SoC-Fensters. Die Batterie wird also in diesen Fällen in einem für die Alterung günstigen Bereich betrieben. Die Ist-Alterung der Batterie bleibt damit immer kleiner als die Alterung die sich einstellt, wenn das SoC-Fenster auf die vom Hersteller vorgegebene maximal zulässige Netto-Kapazität fest eingestellt ist. Durch das erfindungsgemäße Verfahren wird die Alterung der Batterie automatisch zu einem Optimum geführt, ohne dass von außen eingegriffen werden muss und ohne Einbußen an Komfort.

Da prädiktive Abschätzungen der für die Erledigung einer Aufgabe benötigten Energiemenge immer mit einer Unsicherheit behaftet sind, kann vorteilhaft vorgesehen sein, dass die bis zur nächsten Aufladung prognostizierte benötigte nutzbare Kapazität eine Sicherheitsreserve enthält.

In Ausgestaltung des erfindungsgemäßen Verfahrens kann es von Vorteil sein, dass in dem Fall dass die benötigte nutzbare Kapazität größer ist, als die vom Hersteller vorgegebene maximal zulässige Netto-Kapazität der Batterie, die Lade-/Entladesteuerung prüft ob das SoC-Fenster für eine vorgegebene Anzahl von Lade-Entlade-Zyklen kleiner war, als das maximal zulässige SoC-Fenster. Ist das der Fall, stellt die Lade-/Entladesteuerung ein SoC-Fenster ein, das größer ist als das maximal zulässige SoC-Fenster und kleiner oder gleich einem vordefinierten erweiterten SoC-Fenster. Diese Vorgehensweise erlaubt es in Ausnahmefällen die Batterie auf eine erweiterte Netto-Kapazität aufzuladen, die größer ist als die vom Hersteller vorgegebene maximal zulässige Netto-Kapazität.

In den Fällen in denen die ermittelte benötigte nutzbare Kapazität größer ist, als die vom Hersteller vorgegebene maximal zulässige Netto-Kapazität der Batterie und/ oder größer als die erweiterte Netto-Kapazität, kann vorteilhaft vorgesehen sein, dass die Lade-/Entladesteuerung eine Signalgabe veranlasst. Die Signalgabe kann dabei optischer, akustischer oder haptischer Natur sein. Hierdurch wird einer Bedienperson signalisiert, dass eine vordefinierte Aufgabe nur mit einer Zwischenaufladung bewältigt werden kann.

Die in dem der Aufladung vorgelagerten Prozess ermittelte wenigstens eine Kenngröße, die die bis zur nächsten Aufladung benötigte nutzbare Kapazität der Batterie prognostiziert, kann unterschiedlicher Natur sein. So besteht die Möglichkeit eine vordefinierte Aufgabe als Kenngröße heranzuziehen. Dabei kann zum Beispiel vorgesehen sein, aus einer Mehrzahl vordefinierter Aufgaben eine vordefinierte Aufgabe auszuwählen und die ihr zugeordnete Kenngröße zu verwenden. Erfindungsgemäß wird eine Aufgabe prognostiziert. Dabei können zur Gewinnung einer Kenngröße eine Mehrzahl von Parametern zur Bestimmung der Aufgabe herangezogen werden. Besteht eine Aufgabe beispielsweise darin, dass ein vollelektrisch betriebenes Fahrzeug eine bestimmte Strecke zwischen einem Ort "A" und einem Ort "B" zurücklegen soll, können aus der mittels eines Routenberechnungssystems ermittelten Route die zurückzulegende Entfernung und ein zugehöriges Höhenprofil als Parameter ermittelt werden und aus diesen Parametern kann eine erste Kenngröße gebildet werden, die die Aufgabe hinsichtlich des zu deren Erledigung notwendigen Energiebedarfs zumindest zum Teil definiert. Eine erfindungsgemäße Kenngröße sind Umgebungsbedingungen. Als Parameter für Umgebungsbedingungen wird erfindungsgemäß zumindest die Außentemperatur herangezogen. Zusätzlich kommen beispielsweise die Jahreszeit, die Tageszeit oder andere Umgebungsparameter in Frage, aus denen eine Kenngröße gebildet werden kann, zum Beispiel die Verkehrslage zu einer bestimmten Tageszeit. Im Hinblick auf die als beispielhafte Aufgabe angeführte Bewältigung einer Fahrstrecke "A - B" bedeutet dies, dass zum Beispiel aus einer zu einer bestimmten Jahreszeit vorherrschenden Temperatur und einer zu einer bestimmten Tageszeit vorherrschenden Verkehrslage jeweils als Parameter eine zweite Kenngröße gebildet wird. Eine weitere Kenngröße kann personenbezogener Natur sein, nämlich dann, wenn zur Bewältigung einer Aufgabe, hinsichtlich der dafür benötigten Energie, Eigenschaften einer Bedienperson eine Rolle spielen. In einem solchen Fall kann aus einer im Vorfeld durchgeführten personenbezogenen Verhaltensanalyse zum Beispiel ein Energie-Mehrverbrauch oder Energie-Minderverbrauch als Kenngröße ermittelt werden. Bezogen auf das hier gewählte Beispiel "Bewältigen einer bestimmten Strecke" bedeutet dies, dass zum Beispiel eine im Vorfeld durchgeführte Fahrstilanalyse eine energieverbrauchsspezifische Kenngröße liefert.

Ein wesentlicher Aspekt der Erfindung besteht darin, dass jeder Ladevorgang in Abhängigkeit unter anderem von den Außentemperaturen sowie dem daraus resultierenden Klimatisierungsbedarf derart gesteuert werden kann, dass dem Fahrer stets eine verlässliche feste/konstante Reichweite, insbesondere über die gesamte garantierte Eigenschaftsdauer der Hochvolt-Traktionsbatterie, bereitgestellt wird.

Die im vorstehenden Beispiel "Bewältigen einer bestimmten Strecke" ermittelten Kenngrößen ergeben, entsprechend verrechnet, zusammen eine prognostizierte notwendige Kapazität der Batterie, die durch entsprechende Aufladung der Batterie zur Bewältigung der Fahrstrecke vorgehalten werden muss.

Wie das vorstehend gewählte Beispiel bereits erkennen lässt, ist das erfindungsgemäße Verfahren besonders vorteilhaft in Verbindung mit einer Hochvolt-Traktionsbatterie eines vollelektrisch oder teilelektrisch betriebenen Fahrzeugs einzusetzen. In einer besonders einfachen Variante kann dabei vorteilhaft vorgesehen sein, dass die vordefinierte Aufgabe das Bewältigen einer Mindestfahrstrecke bei einem vordefinierten Höhenprofiel ist, wobei die Länge der Fahrstrecke (zum Beispiel 50 km, 100 km, 150 km, usw.) ebenso wie das Höhenprofil (zum Beispiel "flach", "bergig", "gebirgig") über entsprechende Eingabemittel eingebbar ist. Die Eingabe wird dabei in eine Kenngröße übergeführt, die die zur Bewältigung der Aufgabe, zum Beispiel Fahrstrecke 100 km, Höhenprofil "flach", notwendige Kapazität der Batterie definiert.

Das Bewältigen einer im Vorfeld ermittelten Fahrroute, bietet den wesentlichen Vorteil, dass ein Eingriff durch die Bedienperson des Fahrzeugs nicht notwendig ist. Zur Ermittlung der Fahrstrecke kommt erfindungsgemäß ein Routenberechnungssystem zum Einsatz. Dieses greift vorteilhaft auf Daten aus einem Planungssystem zurück, wobei es sich bei dem Planungssystem um einen elektronischen Terminkalender, einen elektronischen Einsatzplaner für ein Güterverteilungssystem oder ähnliche Einrichtungen handeln kann, in denen die anzufahrenden Orte, die Reihenfolge der anzufahrenden Orte und/ oder die Tageszeit zu der eine Ankunft an wenigstens einem Ort geplant ist, vorgehalten sind. Auf diese Weise kann das Routenberechnungssystem eine Fahrroute ermitteln und aus der ermittelten Fahrstrecke und dem der Fahrstrecke zugeordneten Höhenprofil, oder einer äquivalenten Größe die Kenngröße ermitteln.

Auch die Außentemperatur ist für den Energieverbrauch eines voll- oder teilelektrisch betriebenen Fahrzeugs von Bedeutung, es ist daher erfindungsgemäß vorgesehen, die Außentemperatur aus einem Speicher zu entnehmen in dem eine Vielzahl von Außentemperaturen jahreszeitlich und/oder tageszeitlich und/oder örtlich vordefiniert vorgehalten sind. Die jeweils zutreffende Außentemperatur wird erfindungsgemäß mit Hilfe wenigstens einer Datumsangabe und/oder Zeitangabe und/oder Ortsangabe aus dem Speicher entnommen und bildet eine Kenngröße.

Eine andere vorteilhafte Möglichkeit die Außentemperatur zu gewinnen besteht darin, im Wege einer zum Beispiel funktechnischen Datenübertragung Außentemperaturen zeitlich und/ oder örtlich definiert als prognostizierte Außentemperaturen aus einem Wettervorhersagesystem zu beziehen.

Erfindungsgemäß werden zu einer ermittelten Fahrroute eine Mehrzahl von prognostizierten Außentemperaturen ortsbezogen und/oder zeitbezogen aus einem Wettervorhersagesystem ermittelt und die so gewonnenen Außentemperaturen ortsbezogen und zeitbezogen mit der Fahrroute verknüpft, wobei aus diesen verknüpften Daten die voraussichtlich die Kenngröße und/oder die benötigte Kapazität der Batterie ermittelt wird.

Um auch Besonderheiten eines Fahrers des Fahrzeugs in die Ermittlung der prädiktiv abgeschätzten, also voraussichtlich benötigten Kapazität zur Bewältigung der Aufgabe einzubeziehen ist es erfindungsgemäß vorgesehen, den personenbezogenen Energie-Mehrverbrauch oder Energie-Minderverbrauch in einer vorgelagerten personenbezogenen Verbrauchsanalyse zu ermitteln und daraus eine Kenngröße zu bilden. Auf diese Weise lässt sich mittels der Fahrroute als erste Kenngröße, der prognostizierten Außentemperaturen als zweite Kenngröße und der dritten fahrerspezifischen Kenngröße die voraussichtlich benötigte Kapazität der Batterie ermitteln.

Wird ein mit einem Hochvolt-Batteriesystem betriebenes Werkzeug, Fahrzeug oder eine Anlage auf eine im Wesentlichen immer gleiche Weise benutzt, kann es ausreichend sein, die wenigstens eine Kenngröße, aus der Auswertung von wenigstens einem vorausgegangenen Lade-/ Entladezyklus zu gewinnen. So kann zum Beispiel vor dem ersten Einsatz eine Aufladung auf die Netto-Kapazität der Batterie erfolgen. Bei ersten Einsatz wird die tatsächlich benötigte Kapazität erfasst und als Kenngröße verwendet, um die für den nächsten Einsatz benötigte Kapazität zu bestimmen, ein SoC-Fenster davon abzuleiten und die Batterie innerhalb der durch das SoC-Fenster vorgegebenen Grenzen für den nächsten Einsatz aufzuladen.

Zur Erfindung gehört neben dem vorstehend angesprochenen Verfahren auch eine Lade-/Entladeanordnung zur Durchführung des Verfahrens. Die Lade-/Entladeanordnung enthält dabei vorteilhaft eine Reihe von Komponenten, die nachfolgend angesprochen sind.

Zum besseren Verständnis der nachfolgenden Ausführungen ist vorab darauf hinzuweisen, dass es sich bei der in Rede stehenden Lade-/Entladeanordnung um eine Anordnung aus mechanischen und elektronischen Komponenten handelt, wie sie heute üblicherweise eingesetzt werden. Derartige Lade-/Entladeanordnungen sind üblicherweise Teil eines computergestützten Steuersystems, das in Speichern gespeicherte Steuerungsanweisungen mittels Prozessoren verarbeitet. Insbesondere die nachfolgend angesprochenen Komponenten und die von ihnen ausgeführten Steuerungsabläufe sind solche zu Befehlsroutinen zusammengefassten Steuerungsanweisungen, die - verarbeitet durch den oder die Prozessoren - die ihnen zugeordneten Steuerungsaufgaben mittels mit diesem in Wirkverbindung stehenden Eingabe- bzw. Ausgabemittel, Sensoren, Aktoren und Übertragungsmittel ausführen. Die nachfolgend angesprochenen Komponenten sind im Normalfall demnach keine abgrenzbaren Hardwareeinheiten sondern existieren im Rahmen eines computergestützten Steuersystems nur virtuell und temporär.

Die Lade-/Entladeanordnung enthält eine Ermittlungseinrichtung, die wenigstens eine Kenngröße ermittelt, wobei die Kenngröße die bis zur nächsten Aufladung benötigte nutzbare Kapazität der Batterie prognostiziert. Wie vorstehend aufgezeigt, kann die Ermittlungseinrichtung dabei über einen entsprechenden Datenaustausch Daten aus Subsystemen beziehen, mit denen sie temporär, zum Beispiel auf funktechnischem Wege verbunden ist. Um von der Kenngröße oder den Kenngrößen zu einer zur Bewältigung einer Aufgabe benötigten nutzbaren Kapazität zu gelangen ist eine Berechnungseinrichtung vorgesehen, die aus der Kenngröße oder den Kenngrößen eine benötigte nutzbare Kapazität oder eine dazu äquivalente Größe bestimmt. Der Weg auf dem dies geschieht kann unterschiedlich sein: So können die Kenngrößen dazu dienen, die benötigte nutzbare Kapazität aus einer Kennlinie oder einem Kennfeld zu bestimmen. Es kann aber auch notwendig sein komplexe Berechnungen durchzuführen, je nachdem welcher Natur die Kenngrößen sind. Weiter ist eine Bestimmungseinrichtung vorgesehen die aus der benötigten nutzbaren Kapazität ein den Alterungszustand der Batterie optimierendes SoC-Fenster bestimmt. Hierzu bedient sich die Bestimmungseinrichtung einer einfachen Zuordnungsvorschrift. Weiter ist eine Einstellungseinrichtung vorgesehen, die den unteren Wert des SoC-Fensters und den obere Wert es SoC-Fensters einstellt. Schließlich ist die Lade-/Entladeanordnung so ausgebildet, dass dieses den Ladevorgang so steuert, dass die Batterie bis zum oberen Wert des SoC-Fensters aufgeladen wird und den Entladevorgang im Betrieb so steuert, dass die Batterie nur bis zum unteren Wert des SoC-Fensters entladen wird. Die vorstehend erwähnten Komponenten können dabei Teil eines globalen Steuersystems sein, das die Steuerung des Fahrzeugs insgesamt übernimmt. Insbesondere von Vorteil ist es, die Lade-/Entladeanordnung als Modul auszubilden, das dem Steuersystem optional hinzugefügt werden kann.

Weitere Ausgestaltungen und Vorteile der Erfindung werden nachfolgend anhand der Zeichnungen näher erläutert. Es zeigen:
- Fig. 1: eine vereinfachte Funktionsblockdarstellung einer Anordnung zur Lade-/Entladesteuerung eines Hochvolt-Batteriesystems;
- Fig. 2: eine vereinfachte Darstellung der benötigten Kapazität einer Traktionsbatterie eines Fahrzeugs von Wegstrecke und Geländeprofil-Typ in Form eines Kennfeldes
- Fig. 3: eine Darstellung des Zusammenhangs zwischen Kapazität und SoC-Fenster bei einem Hochvolt-Batteriesystem
- Fig. 4: ein Flussdiagramm für einen beispielhaften Verfahrensablauf, und
- Fig. 5 bis 9: jeweils weitere Ausführungsbeispiele der Erfindung.

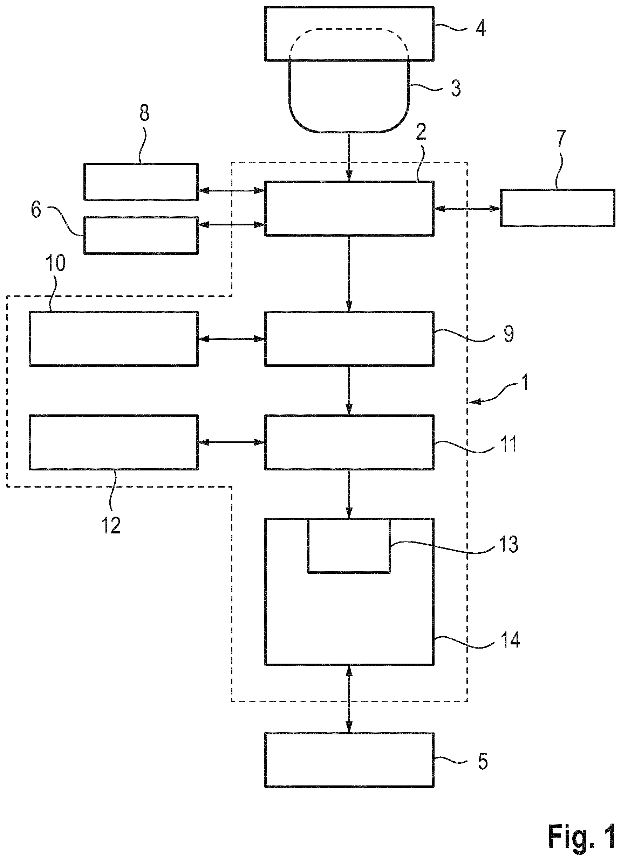

In der Darstellung gemäß Fig. 1 ist in vereinfachter Funktionsblockdarstellung einer Anordnung zur Lade-/Entladesteuerung eines Hochvolt-Batteriesystems 5 dargestellt. Das nachfolgend beschriebene Beispiel geht davon aus, dass die Anordnung zur Lade-/Entladesteuerung 1 Teil eines hier nicht dargestellten vollelektrisch betriebenen Fahrzeugs ist. Hinsichtlich der Darstellung in Form von Funktionsblöcken ist anzufügen, dass diese im Normalfall keine abgrenzbaren Hardwareeinheiten sind, sondern lediglich im Rahmen eines computergestützten Steuersystems virtuell und temporär existieren. Computergestützte Steuersysteme dieser Art sind in der Fahrzeugtechnik gebräuchlich. Sie verarbeiten in Speichern gespeicherte Steuerungsanweisungen mittels Prozessoren. Insbesondere die nachfolgend angesprochenen Komponenten (Funktionsblöcke) und die von ihnen ausgeführten Steuerungsabläufe sind solche zu Befehlsroutinen zusammengefassten Steuerungsanweisungen, die - verarbeitet durch den oder die Prozessoren - die ihnen zugeordnete Steuerungsaufgaben mittels mit diesem in Wirkverbindung stehenden Eingabe- bzw. Ausgabemittel, Sensoren, Aktoren und Übertragungsmittel ausführen.

Die Anordnung zur Lade-/Entladesteuerung 1 enthält eine Ermittlungseinrichtung 2. Diese wird durch Einstecken eines Ladesteckers 3 in eine Ladestation 4 initiiert, Kenngrößen zu ermitteln. Die ermittelten Kenngrößen prognostizieren die bis zur nächsten Aufladung benötigte nutzbare Kapazität eines Hochvolt-Batteriesystems 5, mit anderen Worten, den Energiebedarf, der zur Erledigung einer Aufgabe bis zur nächsten Aufladung in der Batterie 5 vorgehalten werden muss. Im gewählten Beispiel ist vorgesehen, dass die zu bewältigende Aufgabe von der Ermittlungseinrichtung 2 aus einem elektronischen Terminkalender 6 ermittelt wird. Weiter wird angenommen, dass die mit dem Fahrzeug anzufahrenden Orte und die Reihenfolge, in der diese anzufahren sind, im elektronischen Terminkalender 6 für die Ermittlungseinrichtung 2 identifizierbar gespeichert sind.

Beispielhaft wird angenommen, dass die Terminkalendereinträge angeben, dass zu einem vorgegebenen Zeitpunkt "X", ausgehend von der aktuellen Position an der Ladestation 4, drei Orte in der Reihenfolge Ort "A", Ort "B", Ort "C" und anschließend die Ladestation 4 anzufahren sind und die Fahrt zu einem Zeitpunkt "Y" beendet ist. Bei der Ladestation 4 kann es sich beispielsweise um eine Wall-Box am Heimatstandort des Fahrzeugs handeln. Um die Aufgabe zu ermitteln, die bis zum nächsten Ladevorgang zu bewältigen ist, übergibt die Ermittlungseinrichtung 2 die Aufgabendefinition Ladestation 4 -> Ort "A" -> Ort "B" -> Ort "C" -> Ladestation 4 an ein Routenberechnungssystem 7, das Teil eines hier nicht dargestellten Navigationssystems sein kann, um eine Fahrroute zu ermitteln. Es ist hier angenommen, dass das Routenberechnungssystem 7 aus den ihm übermittelten Daten eine Fahrroute bestimmt, die neben der Streckenführung, die in diesem Zusammenhang nicht relevant ist, die Fahrstrecke Sₛₒₗₗ und das Geländeprofil (Höhenprofil) GP ermittelt und diese Informationen an die Ermittlungseinrichtung 2 übergibt. Die Ermittlungseinrichtung 2 ermittelt aus dem Geländeprofil GP einen Geländeprofil-Typ GP_{Typ}. Hier ist angenommen, dass zwanzig unterschiedliche Geländeprofil-Typen GP₁ bis GP₂₀ vorgesehen sind und die Ermittlungseinrichtung 2 das ermittelte Geländeprofil GP einem dieser Geländeprofil-Typen GP₁ bis GP₂₀ zuordnet.

Neben der Fahrstrecke Sₛₒₗₗ und dem Geländeprofil GP für die Bewältigung der Aufgabe sind auch noch Komfortaspekte zu berücksichtigen. Es wird daher angenommen, dass das Ermittlungssystem 2 auf funktechnischem Weg mit einem Wettervorhersagesystem 8 verbunden ist und Temperaturdaten zu den Orten "Ladestation 4", Ort "A", Ort "B", Ort "C", "Ladestation 4" zeitbezogen ermittelt und daraus eine Durchschnittstemperatur Tᵥ berechnet.

Wie aus dem Vorstehenden ersichtlich, hat die Ermittlungseinrichtung 2 im hier aufgezeigten Beispiel die Kenngrößen "Fahrstrecke Sₛₒₗₗ", "Geländeprofil-Typ GP_{Typ}" und "vorhergesagte Durchschnittstemperatur Tᵥ" ermittelt. Diese Auswahl ist aus Gründen der besseren Übersichtlichkeit so getroffen, tatsächlich können natürlich beliebig viele Kenngrößen in der notwendigen Genauigkeit ermittelt und für die nachfolgend beispielhaft beschriebene weitere Bestimmung der benötigten nutzbaren Kapazität der Batterie 5 herangezogen werden.

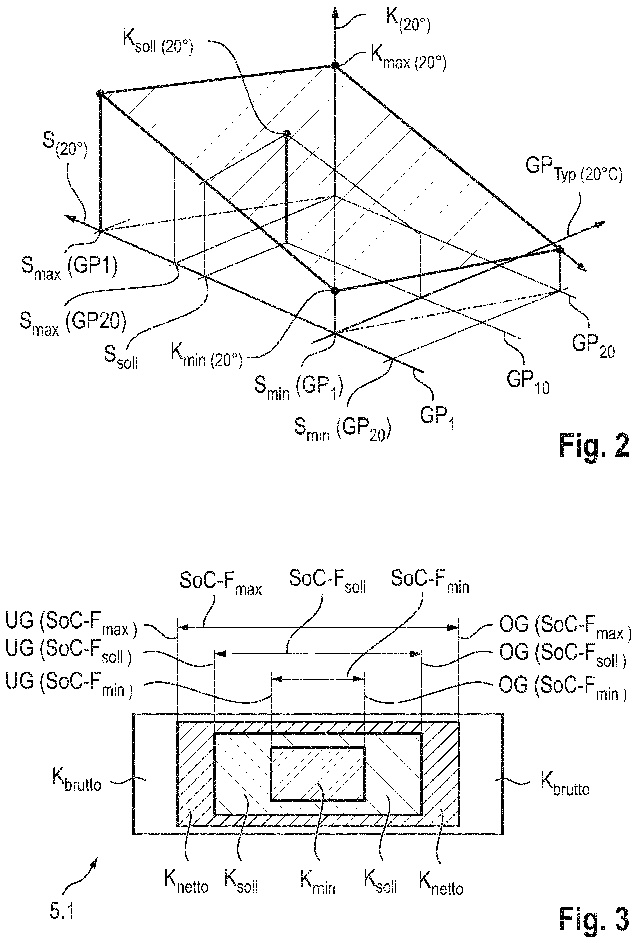

Im weiteren Verfahrensablauf übergibt die Ermittlungseinrichtung 2 die ermittelten Kenngrößen "Fahrstrecke Sₛₒₗₗ", "Geländeprofil-Typ GP_{Typ}" und "vorhergesagte Durchschnittstemperatur Tᵥ" an eine Berechnungseinrichtung 9, die aus den Kenngrößen die benötigte nutzbare Kapazität der Batterie 5 ermittelt. Im hier betrachteten Beispiel ist angenommen, dass die vorhergesagte Durchschnittstemperatur Tᵥ 20°C beträgt. Zur Ermittlung der benötigten Kapazität ist die Berechnungseinrichtung 9 mit einer ersten Speichereinrichtung 10 wirkverbunden. Um von den Kenngrößen zu einer benötigten Kapazität zu gelangen, bedient sich die Berechnungseinrichtung 9 des Inhaltes der ersten Speichereinrichtung 10. Diese beinhaltet eine Vielzahl von Kennfeldern, jeweils in digitaler Form. Jedes dieser Kennfelder ist für eine spezifische Temperatur Tₛ gültig und gibt die benötigte nutzbare Kapazität K in Abhängigkeit von Fahrstrecke S und Geländeprofil-Typ GP_{Typ} an. Liegt die vorhergesagte Durchschnittstemperatur Tᵥ zwischen zwei spezifischen Temperaturen Tₛ, für die Kennfelder vorhanden sind, wird zwischen den Kennfeldern interpoliert, wie dies in solchen Fällen üblich ist. Für den Geländeprofil-Typ ist angenommen, dass eine Unterteilung in zwanzig unterschiedliche Geländeprofil-Typen GP₁ bis GP₂₀ vorgesehen ist. Zum besseren Verständnis ist eines dieser Kennfelder in Fig. 2 stark vereinfacht als Beispiel dargestellt.

Die Fig. 2 zeigt ein dreidimensionales kartesisches Koordinatensystem, in dem in Form eines Kennfeldes die Abhängigkeit der benötigten Kapazität K von der Fahrstrecke S und dem Geländeprofil-Typ GP_{Typ} dargestellt ist. Das Kennfeld gilt dabei für eine Temperatur Tᵥ von 20°C, also der Durchschnittstemperatur Tᵥ, die die Ermittlungseinrichtung 2 ermittelt hat. Für andere Temperaturen Tᵥ gelten andere Kennfelder, die hier nicht dargestellt sind. Verwendet wird das Kennfeld innerhalb zweier Grenzen einer minimalen Kapazität K_{min (20 °C)} und einer maximalen Kapazität K_{max (20 °C)}. Die minimale Kapazität K_{min (20 °C)} ist dabei so festgelegt, dass ein Einfluss auf die Alterung der Batterie bei Kapazitäten kleiner K_{min (20 °C)} unbedeutend ist und unberücksichtigt bleiben kann. Durch diese Vorgehensweise steht nach jedem Laden, je nach zu befahrendem Geländeprofil-Typ, eine Mindestfahrstrecke zwischen Sₘᵢₙ(GP₁) und Sₘᵢₙ(GP₂₀) zur Verfügung, auch wenn andere Kenngrößen für die Berechnung einer benötigten Kapazität nicht ermittelt wurden. Die andere Begrenzung des verwendbaren Bereichs des Kennfeldes ist durch eine maximal zulässige Kapazität K_{max(20°C)} der Batterie bei 20°C festgelegt. Hierbei handelt es sich um die für die Batterie zulässige maximale Netto-Kapazität bei einer Temperatur von 20°C. Mit dieser maximal zulässige Kapazität K_{max(20°C)} sind vom befahrenen Geländeprofil-Typ abhängig unterschiedliche maximale Fahrstrecken Sₘₐₓ zurücklegbar, nämlich zwischen Sₘₐₓ(GP₂₀) und Sₘₐₓ(GP₁).

Für das hier beschriebene Beispiel ist angenommen, dass die Ermittlungseinrichtung 2 (Fig. 1) als Kenngrößen die Fahrstrecke Sₛₒₗₗ, den Geländeprofil-Typ GP₁₀ und die vorhergesagte Durchschnittstemperatur Tᵥ = 20°C an die Berechnungseinrichtung 9 übermittelt hat. Diese entnimmt aus dem Kennfeld gemäß Fig. 2 eine benötigte Kapazität K_{soll(20°C)} und übermittelt diese an eine Bestimmungseinrichtung 11. Aufgabe der Bestimmungseinrichtung 11 ist es, aus der benötigten Kapazität K_{soll(20°C)} ein SoC-Fenster zu bestimmen. Bei dem SoC-Fenster handelt es sich, wie oben bereits ausgeführt, um einen Bereich, innerhalb dessen eine Batterie aufgeladen wird.

Zum besseren Verständnis sind verschiedene SoC-Fenster und ihr Zusammenhang mit der Kapazität eines Hochvolt-Batteriesystems in Fig. 3 schaubildlich dargestellt. Dort ist eine Batterie 5.1 gezeigt, für die Darstellung ist die Form eines Kapazitäts-Schaubildes gewählt. Gemäß der Darstellung weist die Batterie eine Brutto-Kapazität K_{brutto} auf. Diese kann aber nicht vollständig genutzt werden, weil eine Nutzung im oberen und unteren Grenzbereich zu extremen Alterungserscheinungen in Form eines irreversiblen Kapazitätsverlustes führen würde. Aus diesem Grund gibt der Hersteller üblicherweise eine Netto-Kapazität Kₙₑₜₜₒ vor, innerhalb der die Batterie zu betreiben ist, um eine garantierte Zyklenzahl, also eine garantierte Anzahl von Lade-Entlade-Zyklen zu erreichen. Dies bedeutet, dass die Batterie nicht bis auf ihre Brutto-Kapazität K_{brutto} aufgeladen werden darf und nicht unter eine vorgegebene Kapazität entladen werden darf. Der nutzbare Bereich liegt also innerhalb eines Fensters, das üblicherweise als SoC-Fenster bezeichnet wird. Im hier betrachteten Beispiel ist dieser nutzbare Bereich als - im Sinne einer Optimierung der Alterung der Batterie - maximal nutzbares SoC-Fenster SoC-Fₘₐₓ angenommen. Diesem maximal nutzbaren SoC-Fenster SoC-Fₘₐₓ ist ein erster Wert als Obergrenze OG(SoC-Fₘₐₓ) zugeordnet, bis zu dem die Batterie aufgeladen werden darf, und ein zweiter Wert als Untergrenze UG(SoC-Fₘₐₓ), bis zu der die Batterie entladen werden darf. Da sich sowohl das Absenken der Obergrenze auf einen Wert kleiner als OG(SoC-Fₘₐₓ) als auch das Anheben der Untergrenze auf einen Wert größer als UG(SoC-Fₘₐₓ) positiv auf die Alterung der Batterie auswirkt, werden die Grenzen des SoC-Fensters gemäß der Erfindung durch die tatsächlich benötigte Kapazität definiert, wenn diese kleiner als die Netto-Kapazität ist. Ergibt sich eine benötigte Kapazität, die größer als die Netto-Kapazität ist, kommt das maximal zulässige SoC-Fenster SoC-Fₘₐₓ zur Anwendung. Für den Fall, dass die ermittelte benötigte Kapazität unter einer minimalen Kapazität liegt, bei deren variabler Nutzung sich keine Alterungsvorteile mehr ergeben, ist im hier gewählten Beispiel vorgesehen die Batterie auf eine Mindestkapazität Kₘᵢₙ aufzuladen. Das sich daraus ergebende SoC-Fenster weist als obere Grenze den Wert OG(SoC-Fₘᵢₙ) und als untere Grenze den Wert UG(SoC-Fₘᵢₙ) auf. Im betrachteten Beispiel stellt der Bereich zwischen der Netto-Kapazität Kₙₑₜₜₒ und der minimalen Kapazität Kₘᵢₙ den variabel nutzbaren Kapazitätsbereich dar. Unter dem variablen Kapazitätsbereich wird hier verstanden, dass dann, wenn die benötigte Kapazität Kₛₒₗₗ zur Bewältigung einer prädiktiv ermittelt Aufgabe - hier einer Fahrstrecke Sₛₒₗₗ - größer ist als die minimale Kapazität Kₘᵢₙ und kleiner als die Netto-Kapazität Kₙₑₜₜₒ, von der benötigte Kapazität Kₛₒₗₗ ein SoC-Fenster SoC-Fₛₒₗₗ abgeleitet wird, dem ein erster Wert als obere Grenze OG(SoC-Fₛₒₗₗ) und ein zweiter Wert als untere Grenze UG(SoC-Fₛₒₗₗ) zugeordnet ist. Die obere Grenzen OG(SoC-Fₛₒₗₗ) ist dabei kleiner OG(SoC-Fₘₐₓ) und die untere Grenze UG(SoC-Fₛₒₗₗ) ist größer UG(SoC-Fₘₐₓ), so dass sich ein Aufladen der Batterie bis zur oberen Grenzen OG(SoC-Fₛₒₗₗ) und ein Entladen der Batterie bis zur unteren Grenze UG(SoC-Fₛₒₗₗ) positiv auf die Alterung der Batterie auswirkt. Für die Nutzung einer so betriebenen Batterie bedeutet dies, dass die vom Hersteller angegebene Nettokapazität Kₙₑₜₜₒ dem Nutzer für eine größere Zyklen-Anzahl als der vom Hersteller angegebenen zur Verfügung steht.

Wie zu Fig. 1 ausgeführt, besteht die Aufgabe der Bestimmungseinrichtung 11 darin, aus der benötigten Kapazität K_{soll(20°C)} ein SoC-Fenster zu bestimmen. Hierzu bedient sich die Bestimmungseinrichtung 11 einer zweiten Speichereinrichtung 12. Zur Ermittlung des SoC-Fensters wird aus der benötigten Kapazität K_{soll(20°C)} ein Zugriff auf Inhalte der Speichereinrichtung 12 abgeleitet, der die Daten einer Vielzahl von SoC-Fenstern in Form von Werten zu deren Obergrenzen und Untergrenzen enthält. Im hier betrachteten Beispiel entnimmt die Bestimmungseinrichtung 11 mit Hilfe der benötigten Kapazität K_{soll(20°C)} - quasi als Adressierung - aus der Speichereinrichtung 12 einen ersten Wert als obere Grenze OG(SoC-Fₛₒₗₗ) und einen zweiten Wert als untere Grenze UG(SoC-Fₛₒₗₗ) des SoC-Fenster SoC-Fₛₒₗₗ und übermittelt diese an eine Einstelleinrichtung 13 eines Batteriemanagementsystems 14, das den Lade-Entlade-Vorgang der Batterie 5 steuert. Das Batteriemanagementsystem 14 steuert den Aufladevorgang der Batterie 5 so, dass diese bis zur oberen Grenze OG(SoC-Fₛₒₗₗ) des SoC-Fenster SoC-Fₛₒₗₗ aufgeladen wird. Während des nächsten Betriebszyklus des Fahrzeugs zur Bewältigung der Fahrstrecke Sₛₒₗₗ steuert das Batteriemanagementsystem 14 den Entladevorgang so, dass die Batterie 5 nicht unter die untere Grenze UG(SoC-Fₛₒₗₗ) des SoC-Fenster SoC-Fₛₒₗₗ entladen wird. Alternativ kann vorgesehen sein, dass automatisch oder auf eine Eingabe durch den Fahrer hin, ein Teil des Kapazitätsbereichs unterhalb der unteren Grenze UG(SoC-Fₛₒₗₗ) der benötigten Kapazität Kₛₒₗₗ und oberhalb der unteren Grenze UG(SoC-Fₘₐₓ) der Netto-Kapazität Kₙₑₜₜₒ als Kapazitätsreserve freigegeben wird, wenn diese vom Fahrer abgefordert wird.

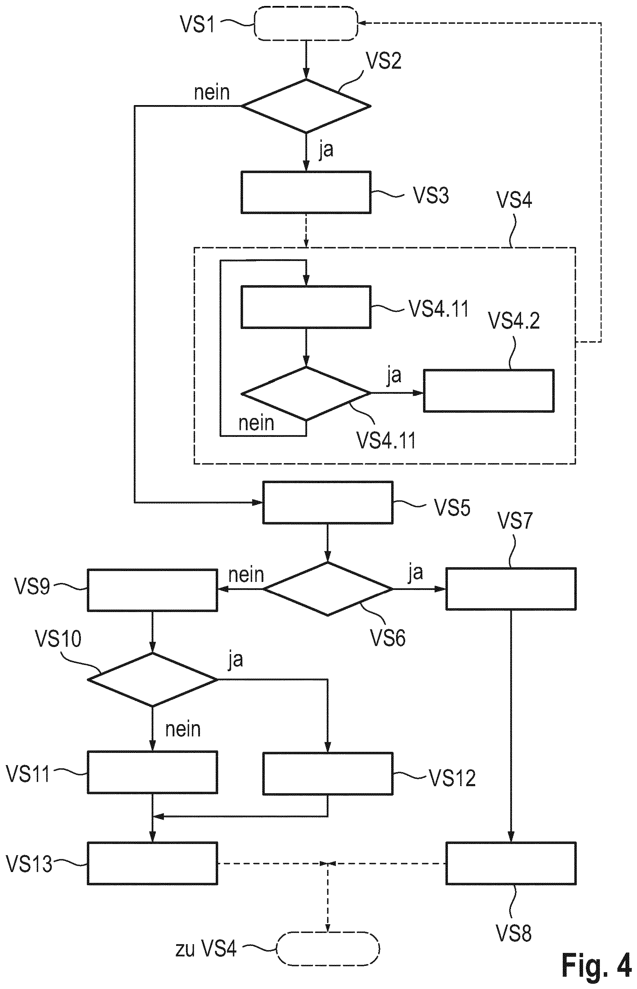

In Ausgestaltung des vorstehend beschriebenen Beispiels sind zahlreiche Abwandlungen denkbar. So besteht zum Beispiel die Möglichkeit, persönliche Vorlieben und Eigenschaften des Fahrers im Vorfeld zum Beispiel über ein Fahreranalysesystem (nicht dargestellt) zu erfassen und als Kennwert in die Bestimmung des voraussichtlichen Kapazitätsbedarfs einzubeziehen. Weiter besteht die Möglichkeit, die Anordnung sowie das Verfahren so auszugestalten, dass während des Betriebs Daten gesammelt werden und so nach Art eines selbstlernenden Systems Korrekturfaktoren ermittelt werden, die in die Berechnung der voraussichtlich benötigten Kapazität zur Bewältigung einer nachfolgenden Aufgabe eingehen. Eine andere Anwendung zeigt Fig. 4 in Form eines Flussdiagramms. In diesem Beispiel ist angenommen, dass die zu bewältigende Aufgabe im Wesentlichen immer gleich ist und nur geringen Schwankungen unterliegt. Das ist zum Beispiel dann der Fall, wenn mit einem Software-Tool, das durch eine Batterie mit Energie versorgt wird, immer die gleichen Arbeitsvorgänge während zweier Ladevorgänge, zum Beispiel während einer Arbeitsschicht an einem Montageband, durchgeführt werden. Weiter ist angenommen, dass die Netto-Kapazität der Batterie so ausgelegt ist, dass das Software-Tool die zu bewältigende Aufgabe mit einer Ladung sicher bewältigt und im Normalfall eine Sicherheitsreserve in der Batterie verbleibt. Für die steuerungstechnische Ausführung ist weiter angenommen, dass die Lade-/Entladesteuerung Teil des Werkzeugs ist und das Werkzeug eine Schalteinrichtung besitzt, mit der eine Maximal-Ladung angefordert werden kann. In der nachfolgenden Beschreibung wird zur Veranschaulichung auch auf die Darstellung in Fig. 3 Bezug genommen. Die vorstehend zur Fig. 3 getroffenen Aussagen gelten daher auch zum Beispiel nach Fig. 4, mit Ausnahme der Ausführungen zur Mindestkapazität Kₘᵢₙ, die im Beispiel nach Fig. 4 nicht vorgesehen ist.

Ausgehend vom Vorstehenden kann das Verfahren gemäß der Darstellung in Fig. 4 die nachfolgend beispielhaft aufgeführten Verfahrensschritte enthalten. Manuell durchzuführende Schritte sind in der Darstellung durch gestrichelte Linien kenntlich gemacht.

Verfahrensschritte:

| | | | |
|---|---|---|---|
| VS1: | Ein Ladevorgang wird durch manuelles Einstecken des Werkzeugs in eine Ladestation initiiert. | | |
| VS2: | Abfrage durch die Lade-/Entladesteuerung: Wurde Schalteirichtung "Maximal-Ladung" gesetzt? Wenn "ja" weiter mit Verfahrensschritt VS3, wenn "nein" weiter mit Verfahrensschritt VS5. | | |
| VS3: | Die Lade-/Entladesteuerung stellt das SoC-Fester SoC-Fₘₐₓ mit einem ersten Wert als Obergrenze OG(SoC-Fₘₐₓ) und einem zweiten Wert als Untergrenze UG(SoC-Fₘₐₓ) ein, lädt die Batterie auf die Netto-Kapazität Kₙₑₜₜₒ auf und speichert die Netto-Kapazität Kₙₑₜₜₒ als Soll-Kapazität Kₛₒₗₗ. Weiter mit Verfahrensschritt VS4. | | |
| VS4: | Das Werkzeug wird eingesetzt. Während der Durchführung der zu bewältigenden Aufgabe läuft gesteuert durch die Lade-/Entladesteuerung folgender Prozess automatisch ab: | | |
| | | VS4.11 | Die Lade-/Entladesteuerung stellt zyklisch die Rest-Kapazität K_{Rest} der Batterie durch einen Messvorgang fest. |
| | | VS4.12 | Die Lade-/Entladesteuerung ermittelt zyklisch ob K_{brutto} minus Kₙₑₜₜₒ kleiner ist als die gemessene Rest-Kapazität K_{Rest}. Wenn "ja", weiter mit VS4.2, wenn "nein" weiter mit VS4.11. |
| | | VS4.2 | Die Lade-/Entladesteuerung fordert durch eine akustische und/ oder optische und/ oder haptische Signalgabe zum sofortigen Aufladen auf und setzt die Schalteirichtung "Maximal-Ladung". |
| | Nach Durchführung der zu bewältigenden Aufgabe oder nach Signalgabe erfolgt ein manuell eingeleitetes Aufladen. Weiter mit Verfahrensschritt VS1. | | |
| VS5: | Die Lade-/Entladesteuerung stellt die Rest-Kapazität K_{Rest} der Batterie durch einen Messvorgang fest. Weiter mit Verfahrensschritt VS6. | | |
| VS6: | Die Lade-/Entladesteuerung prüft, ob die Rest-Kapazität K_{Rest} der Batterie größer ist als eine vorgegebene Reserve-Kapazität K_{Reserve}. Wenn "ja" weiter mit Verfahrensschritt S7, wenn "nein" weiter mit Verfahrensschritt S9. | | |
| VS7 | Die Lade-/Entladesteuerung berechnet eine neue Soll-Kapazität Kₛₒₗₗ(neu) in dem sie die gespeicherte Soll-Kapazität Kₛₒₗₗ abruft, die gemessene Rest-Kapazität K_{Rest} davon abzieht und die vorgegebene Reserve-Kapazität K_{Reserve} hinzu zählt. Sodann speichert Die Lade-/Entladesteuerung die neue Soll-Kapazität Kₛₒₗₗ(neu) als jetzt gültige Soll-Kapazität Kₛₒₗₗ und ermittelt aus der gespeicherten Soll-Kapazität Kₛₒₗₗ ein SoC-Fenster SoC-Fₛₒₗₗ. Weiter mit Verfahrensschritt VS8. | | |
| VS8 | Die Lade-/Entladesteuerung stellt zur Steuerung des Lade-Entladevorgangs das SoC-Fenster SoC-Fₛₒₗₗ mit dem ersten Wert als Obergrenze OG(SoC-Fₛₒₗₗ) und dem zweiten Wert als UG(SoC-Fₛₒₗₗ) ein, lädt die Batterie auf die gespeicherte Soll-Kapazität Kₛₒₗₗ auf. Weiter mit Verfahrensschritt VS11. | | |
| VS9 | Die Lade-/Entladesteuerung berechnet eine neue Soll-Kapazität Kₛₒₗₗ(neu) in dem sie die gespeicherte Soll-Kapazität Kₛₒₗₗ abruft, und die vorgegebene Reserve-Kapazität K_{Reserve} hinzu zählt. Weiter mit Verfahrensschritt VS10. | | |
| VS10 | Abfrage durch die Lade-/Entladesteuerung: Ist die neue Soll-Kapazität Kₛₒₗₗ(neu) kleiner Kₙₑₜₜₒ, wenn "ja" weiter mit Verfahrensschritt VS11, wenn "nein" weiter mit Verfahrensschritt VS12. | | |
| VS11 | Die Lade-/Entladesteuerung speichert die neue Soll-Kapazität Kₛₒₗₗ(neu) als Soll-Kapazität Kₛₒₗₗ. Weiter mit Verfahrensschritt VS13. | | |
| VS12 | Die Lade-/Entladesteuerung speichert die Netto-Kapazität Kₙₑₜₜₒ als Soll-Kapazität Kₛₒₗₗ. Weiter mit Verfahrensschritt VS13. | | |
| VS13 | Die Lade-/Entladesteuerung stellt zur Steuerung des Lade-Entladevorgangs das zur gespeicherten Soll-Kapazität Kₛₒₗₗ gehörige SoC-Fenster SoC-Fₛₒₗₗ mit dem ersten Wert als Obergrenze OG(SoC-Fₛₒₗₗ) und dem zweiten Wert als Untergrenze UG(SoC-Fₛₒₗₗ) ein, lädt die Batterie auf die Soll-Kapazität Kₛₒₗₗ auf. Weiter mit Verfahrensschritt VS4. | | |

Der vorstehend beschriebene Verfahrensablauf stellt sicher, dass für den Lade-Entladevorgang der Batterie ein SoC-Fenster genutzt wird, das immer innerhalb des maximal zulässigen SoC-Fensters SoC-Fₘₐₓ liegt, und zwar in der Mehrzahl der Fälle deutlich innerhalb, so dass die Alterung der Batterie günstig beeinflusst und die erreichbare Zyklenzahl erhöht wird. In Ausgestaltung des vorstehend beschriebenen Verfahrensablaufs kann vorgesehen sein, dass die Schalteinrichtung "Maximal-Ladung" auch manuell gesetzt werden kann, indem die Bedienperson ein Eingabemittel betätigt. Dies ist zum Beispiel dann notwendig, wenn das nach dem vorstehend beschriebenen Verfahren arbeitende Werkzeug neu oder an anderer Stelle eingesetzt wird. Ein nach den vorstehend beschriebenen Merkmalen ausgestattetes Werkzeug sucht sich, jeweils ausgehend vom vorhergehenden Arbeitszyklus, nach Art eines selbstlernenden Prozesses automatisch eine Soll-Kapazität Kₛₒₗₗ. Das mit der Soll-Kapazität Kₛₒₗₗ verbundene SoC-Fenster SoC-Fₛₒₗₗ ist dabei in der Mehrzahl der Fälle kleiner als das der Netto-Kapazität Kₙₑₜₜₒ zugeordnete SoC-Fenster SoC-Fₙₑₜₜₒ und liegt innerhalb der Grenzen des der Netto-Kapazität Kₙₑₜₜₒ zugeordnete SoC-Fenster SoC-Fₙₑₜₜₒ, so dass eine optimierte Alterung der Batterie erreicht wird.

Obgleich für ein Software-Tool konzipiert, lässt sich das vorstehend beschriebene Verfahren vom Prinzip her auch für eine fahrzeugtechnische Anwendung verwenden, wenn die zwischen zwei Ladevorgängen zu bewältigende Fahrstrecke im Wesentlichen die gleiche ist. So ist vorstellbar Fahrzeuge bei einem Post- oder Paketzustelldienst so einzusetzen, dass im Wesentlichen immer die gleiche Fahrstrecke anfällt. In diesem Fall kann das Verfahren nach Fig. 4 auf diese Anwendung übertragen werden.

Mittels der Erfindung kann eine prädiktive Bestimmung des SoC-Betriebsfensters der Batterie 5 für anstehende Fahrten erfolgen. Eine Auswerteeinheit kann auf der Grundlage der folgenden Parameter das SoC-Betriebsfenster ermitteln:
1. Informationen über geplante Routen (smarte Kalenderabfrage) zur Bestimmung der erforderlichen Reichweite;
2. Zusätzliche Wünsche durch den Fahrer (zum Beispiel Standheizung, Fahrt zum Baumarkt mit Anhänger, Camping, etc.);
3. Wettervorhersage zur Ermittlung der Klimatisierungsbedarfe als Nebenverbrauch;
4. Elektrischer Verbrauch aus vorherigen Fahrten (Auswertung der letzten Fahrten); nutzungsspezifische Verbrauchswerte;
Auf der Grundlage der obigen Parameter kann die Auswerteeinheit das HV-Lademanagement und das Batteriemanagementsystem ansteuern.

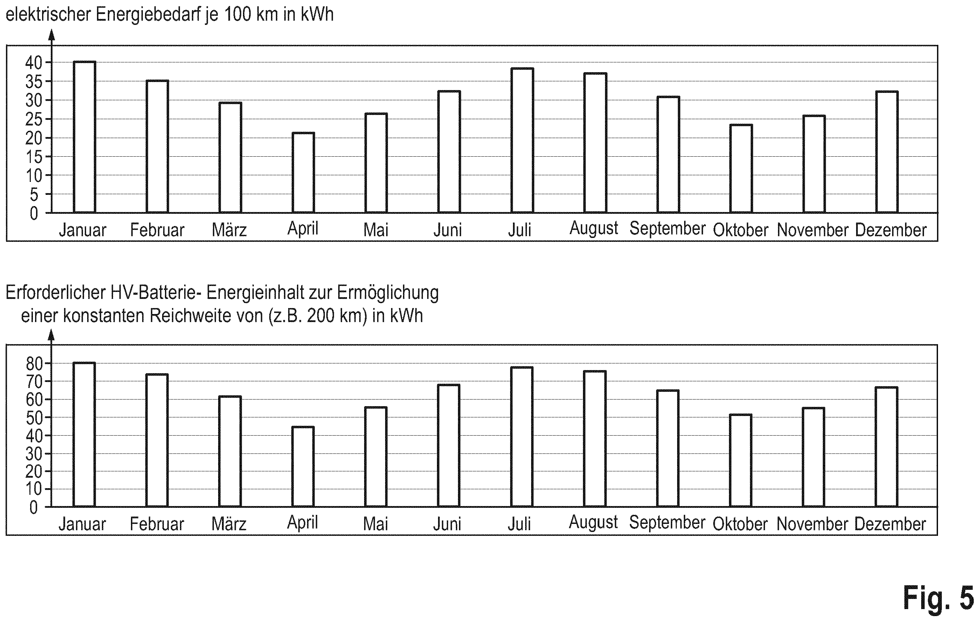

Ein Kerngedanke der Erfindung besteht darin, dass jeder Ladevorgang der Batterie 5 in Abhängigkeit von den Außentemperaturen und dem daraus resultierenden Klimatisierungsbedarf derart gesteuert wird, dass dem Fahrer stets eine verlässliche feste/konstante Reichweite, insbesondere über die garantierte Eigenschaftsdauer der Batterie, bereitgestellt wird. Beispielhaft kann dem Kunden eine feste/konstante Reichweite von 200 km bereitgestellt werden, wie es aus den beiden Diagrammen der Figur 5 hervorgeht. Demnach veranschaulicht das obere Diagramm einen elektrischen Energiebedarf je 100 km in kWh über die Monate eines Jahres hinweg. Das untere Diagramm veranschaulicht für jeden Monate den dazu korrespondierenden, erforderlichen HV-Batterie-Energieinhalt, mit dem eine konstante Reichweite von beispielhaft 200 km in kWh ermöglicht wird. Wie aus der Figur 5 hervorgeht, besteht im Winter ein hoher Heizbedarf, während im Sommer ein hoher Kühlungsbedarf besteht (und zwar im Vergleich zu Frühjahr/Herbst), wodurch der elektrische Verbrauch erhöht wird. Daher muss ein höherer Energieinhalt in die Batterie geladen werden, damit die Leistungsanforderungen der HV-Nebenverbraucher die garantierte Reichweite von 200 km dem Fahrer zur Verfügung steht.

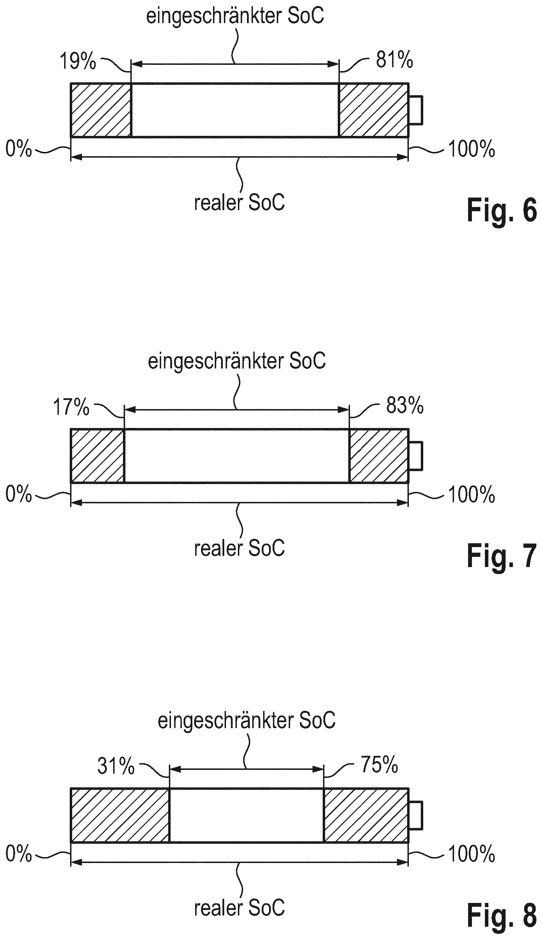

Der obige Sachverhalt wird anhand der Figuren 6 bis 9 nochmals erläutert: So kann in einer ersten Ausführungsvariante (Figur 6) das Fahrzeug eine Batterie 5 mit einen Brutto-Energieinhalt von 80 kWh aufweisen. Beispielhaft liegt die Außentemperatur bei 18°C. Exemplarisch ist ein klassischer Fahrzyklus für Lieferdienste geplant. Der elektrische Verbrauch für diesen spezifischen Zyklus wird bei der aktuellen Außentemperatur abgeschätzt. Der hierzu erforderliche Batterieinhalt (zum Beispiel 50 kWh) zur Bereitstellung der konstanten Reichweite (das heißt zum Beispiel 200 km) wird berechnet und zum Beispiel einem intelligenten Ladegerät übermittelt. Über das Ladegerät wird die Batterie 5 zum Beispiel bis zu einem Energieinhalt von 50 kWh aufgeladen.

Im Gegensatz zur obigen ersten Ausführungsvariante (Figur 6) liegt in der zweiten Ausführungsvariante (Figur 7) die Außentemperatur bei 35°C. Es ist ebenfalls wieder ein klassischer Fahrzyklus für Lieferdienste geplant. Aufgrund der höheren Außentemperatur wird der Klimatisierungsbedarf ansteigen. Entsprechend steigt auch der abgeschätzte elektrische Verbrauch für diesen Zyklus an. Um eine konstante Reichweite (zum Beispiel 200 km) bei erhöhtem elektrischem Verbrauch bereitstellen zu können, wird der erforderliche Energieinhalt der Batterie (im Vergleich zur Figur 6) erhöht (zum Beispiel um 5%). Mit Hilfe des intelligenten Lademanagements wird nun die Batterie auf den erforderlichen Energieinhalt aufgeladen (50 kWh + 5% = 52,5 kWh).

Alternativ dazu liegt in einer dritten Ausführungsvariante (Figur 8) die Außentemperatur bei 0°C. Geplant ist eine Fahrt zum Beispiel zur Arbeitsstätte. In diesem Fall wird der elektrische Verbrauch je 100 km (das heißt Antrieb + HV-Nebenverbraucher) von zuvor ausgewerteten Fahrten zur Arbeit mit ähnlichen Außentemperaturen berücksichtigt. Zusätzlich wählt der Fahrer am Vorabend zum Beispiel über sein Mobiltelefon die Vorkonditionierung des Fahrzeuginnenraums auf 22°C, wodurch eine reduzierte Leistungsanforderung an die HV-Heizer im Innenraum gegeben ist. Zudem kann der Fahrer angeben, dass er sein Fahrzeug bei der Arbeitsstätte nachladen kann. Auf Basis der obigen Informationen kann die Auswerteeinheit die erforderliche HV-Batterieladung (zuzüglich Ungenauigkeitszuschlag) ermitteln. Beispielhaft kann bei einer Batterie mit Brutto-Energieinhalt von 80 kWh sowie einen Energiebedarf je 100 km von ca. 20 kWh der über das Ladegerät aufgeladene Energieinhalt bei zum Beispiel 60% liegen.

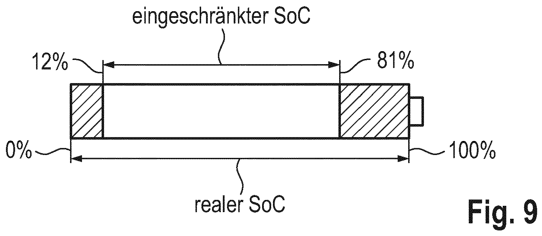

Gemäß einer vierten Ausführungsvariante (Figur 9) kann die Außentemperatur bei 15°C liegen. Geplant ist eine Fahrt zum Baumarkt mit Anhänger. Die erforderliche Reichweite zu Baumärkten kann in der nahen Umgebung über das Navigationsgerät ermittelt werden oder über einen Zugriff auf private Kalender/Eingabe in Fahrzeug-Apps. Der elektrische Energiebedarf je 100 km (Antrieb + HV-Nebenverbraucher) von zuvor ausgewerteten Fahrten mit Anhänger und mit ähnlichen Außentemperaturen wird berücksichtigt. Zusätzlich wird die maximale Zuladung des Anhängers berücksichtigt. Auf Basis der oben genannten Informationen kann die Auswerteeinheit die erforderliche Batterieladung (zuzüglich Ungenauigkeitszuschlag) ermitteln.

Beispielhaft ergibt sich bei einer Batterie mit Brutto-Energieinhalt von 80 kWh ein Energiebedarf je 100 km von ca. 35 kWh. Aufgrund des höheren (prädiktierten) Verbrauches wird eine höhere Energiemenge in die Batterie geladen, zum Beispiel 70 kWh.

### Bezugszeichenliste

- **1**: Lade-/Entladesteuerung
- 2: Ermittlungseinrichtung
- 3: Ladestecker
- 4: Ladestation
- 5, 5.1: Hochvolt-Batteriesystem
- 6: elektronischer Terminkalender
- 7: Routenberechnungssystem
- 8: Wettervorhersagesystem
- 9: Berechnungseinrichtung
- 10: erste Speichereinrichtung
- 11: Bestimmungseinrichtung
- 12: zweite Speichereinrichtung
- 13: Einstelleinrichtung
- 14: Batteriemanagementsystem
- VS1 bis VS14: Verfahrensschritte
- GP_{Typ(20°C)}: Geländeprofil-Typ bei 20°C
- GP1 bis GP20: Geländeprofil-Typen
- K_{brutto}: Brutto-Kapazität (der Batterie 5)
- Kₙₑₜₜₒ: Netto-Kapazität (der Batterie 5)
- Kₛₒₗₗ: Soll-Kapazität (der Batterie 5)
- Kₘᵢₙ: Minimal-Kapazität (der Batterie 5)
- K_{20°c}: Kapazität (der Batterie 5) bei 20°C
- K_{soll(20^C)}: Soll-Kapazität (der Batterie 5) bei 20°C
- K_{min(20^C)}: Minimal-Kapazität (der Batterie 5) bei 20°C
- K_{max(20^C)}: Maximal-Kapazität (der Batterie 5) bei 20°C
- S_{(20°C)}: Fahrstrecke bei 20°C
- Sₘᵢₙ(GP1): minimale Fahrstrecke bei Geländeprofil-Typ 1
- Sₘᵢₙ(GP20): minimale Fahrstrecke bei Geländeprofil-Typ 20
- Sₘₐₓ(GP1): maximale Fahrstrecke bei Geländeprofil-Typ 1
- Sₘₐₓ(GP20): maximale Fahrstrecke bei Geländeprofil-Typ 20
- Sₛₒₗₗ: Soll-Fahrstrecke
- SoC-Fₘₐₓ: maximales SoC-Fenster
- SoC-Fₛₒₗₗ: Soll-SoC-Fenster
- SoC-Fₘᵢₙ: minimales SoC-Fenster
- UG(SoC-Fₘₐₓ): Untergrenze maximales SoC-Fenster
- OG(SoC-Fₘₐₓ): Obergrenze maximales SoC-Fenster
- UG(SoC-Fₛₒₗₗ): Untergrenze Soll-SoC-Fenster
- OG(SoC-Fₛₒₗₗ): Obergrenze Soll-SoC-Fenster
- UG(SoC-Fₘᵢₙ): Untergrenze minimales SoC-Fenster
- OG(SoC-Fₘᵢₙ): Obergrenze minimales SoC-Fenster

## Patentansprüche

1. Verfahren zur Lade-/Entladesteuerung eines Hochvolt-Batteriesystems (5), wobei unterschiedliche nutzbare Kapazitäten der Batterie des Hochvolt-Batteriesystems (5) durch unterschiedliche Wahl von SoC-Fenstern einstellbar sind, wobei
- in einem einer Aufladung vorgelagerten Prozess wenigstens eine Kenngröße ermittelt wird, die eine bis zur nächsten Aufladung benötigte nutzbare Kapazität (Kₛₒₗₗ) der Batterie prognostiziert,
- die wenigstens eine Kenngröße in eine benötigte nutzbare Kapazität (Kₛₒₗₗ) übergeführt wird,
- aus der benötigten nutzbaren Kapazität (Kₛₒₗₗ) ein den Alterungszustand der Batterie optimierendes Soll-SoC-Fenster (SoC-Fₛₒₗₗ) bestimmt wird, derart, dass das Soll-SoC-Fenster (SoC-Fₛₒₗₗ) kleiner einem maximal zulässigen SoC-Fenster (SoC-Fₘₐₓ) ist und innerhalb des maximal zulässigen SoC-Fenster (SoC-Fₘₐₓ) liegt,
- das Soll-SoC-Fenster (SoC-Fₛₒₗₗ) eingestellt wird,
- die Batterie (5) innerhalb des durch das Soll-SoC-Fenster (SoC-Fₛₒₗₗ) vorgegebenen Bereichs geladen wird,
- das Entladen der Batterie (5) in dem durch das Soll-SoC-Fenster (SoC-Fₛₒₗₗ) vorgegebenen Bereich erfolgt,
wobei die benötigte nutzbare Kapazität aus einer prognostizierten Aufgabe gewonnen wird, und
wobei die prognostizierte Aufgabe das Bewältigen einer im Vorfeld ermittelten Fahrroute eines vollelektrisch oder teilelektrisch betriebenen Fahrzeugs umfassend das Hochvolt-Batteriesystem (5), ist, und
wobei die Fahrroute mittels eines Routenberechnungssystems (7) ermittelt wird,
wobei die benötigte nutzbare Kapazität zusätzlich aus Umgebungsbedingungen gewonnen wird, und
wobei die Umgebungsbedingung die Außentemperatur ist, und
wobei die Außentemperatur eine jahreszeitlich und/oder tageszeitlich und örtlich vordefinierte, in einem Speicher vorgehaltene Außentemperatur ist, und
wobei die jeweils zu berücksichtigende Außentemperatur mit Hilfe wenigstens einer Datumsangabe und/oder Zeitangabe und Ortsangabe aus dem Speicher entnommen wird, und
wobei eine Mehrzahl von prognostizierten Außentemperaturen ortsbezogen und zeitbezogen aus einem Wettervorhersagesystem (8) ermittelt werden,
wobei die so gewonnenen Außentemperaturen ortsbezogen und zeitbezogen mit der Fahrroute verknüpft werden, und
wobei aus diesen verknüpften Daten die Kenngröße ermittelt wird, und wobei die benötigte nutzbare Kapazität zusätzlich aus wenigstens einem der folgenden Parameter gewonnen wird, nämlich personenbezogener Energie-Mehrverbrauch oder personenbezogener Energie-Minderverbrauch einer Bedienperson, wobei der personenbezogene Energie-Mehrverbrauch oder Energie-Minderverbrauch aus einer vorgelagerten personenbezogenen Verbrauchsanalyse als Kenngröße gewonnen wird.

2. Verfahren nach Anspruch 1, **dadurch gekennzeichnet, dass** die bis zur nächsten Aufladung prognostizierte benötigte nutzbare Kapazität eine Sicherheitsreserve enthält.

3. Verfahren nach einem der vorhergehenden Ansprüche, **dadurch gekennzeichnet, dass** die Batterie (5) eine Hochvolt-Traktionsbatterie des vollelektrisch oder teilelektrisch betriebenen Fahrzeugs ist, und dass die vordefinierte Aufgabe das Bewältigen einer Mindestfahrstrecke bei einem vordefinierten Höhenprofil ist.

4. Verfahren nach Anspruch 3, **dadurch gekennzeichnet, dass** jeder Ladevorgang in Abhängigkeit unter anderem von den Außentemperaturen sowie dem daraus resultierenden Klimatisierungsbedarf derart angesteuert wird, dass dem Fahrer stets eine verlässliche feste/konstante Reichweite bereitgestellt wird.

5. Verfahren nach Anspruch 3 oder 4, **dadurch gekennzeichnet, dass** das Planungssystem die Reihenfolge der anzufahrenden Orte und/ oder die Tageszeit, zu der eine Ankunft an wenigstens einem Ort geplant ist, enthält, und dass das Routenberechnungssystems (7) daraus eine Fahrroute ermittelt.

6. Verfahren nach einem der vorhergehenden Ansprüche, **dadurch gekennzeichnet, dass** die wenigstens eine Kenngröße, aus der Auswertung von wenigstens einem vorausgegangenen Lade- Entladezyklus gewonnen wird.

7. Anordnung zur Lade-/Entladesteuerung zur Durchführung des Verfahrens nach einem der vorhergehenden Ansprüche, wobei die Anordnung zur Lade-/Entladesteuerung
- eine Ermittlungseinrichtung (2) enthält, die wenigstens eine Kenngröße ermittelt, wobei die wenigstens eine Kenngröße die bis zur nächsten Aufladung benötigte Kapazität (Kₛₒₗₗ) der Batterie (5) repräsentiert,
- eine Berechnungseinrichtung (9) enthält, die aus der Kenngröße die benötigte Kapazität (Kₛₒₗₗ) berechnet,
- eine Bestimmungseinrichtung (11) enthält, die ein den Alterungszustand der Batterie optimierendes SoC-Fenster (SoC-Fₛₒₗₗ) bestimmt, derart, dass das Soll-SoC-Fenster (SoC-Fₛₒₗₗ) kleiner einem maximal zulässigen SoC-Fenster (SoC-Fₘₐₓ) ist und innerhalb des maximal zulässigen SoC-Fenster (SoC-Fₘₐₓ) liegt,
- eine Einstelleinrichtung enthält, die das SoC-Fenster (SoC-Fₛₒₗₗ) einstellt,
- die Batterie (5) innerhalb des durch das Soll-SoC-Fenster (SoC-Fₛₒₗₗ) vorgegebenen Bereichs geladen wird,
- das Entladen der Batterie (5) in dem durch das Soll-SoC-Fenster (SoC-Fₛₒₗₗ) vorgegebenen Bereich erfolgt,
wobei die benötigte nutzbare Kapazität aus einer prognostizierten Aufgabe gewonnen ist, und
wobei die prognostizierte Aufgabe das Bewältigen einer im Vorfeld ermittelten Fahrroute eines vollelektrisch oder teilelektrisch betriebenen Fahrzeugs umfassend das Hochvolt-Batteriesystem, ist,
wobei die Fahrroute mittels eines Routenberechnungssystems (7) ermittelbar ist, wobei die benötigte nutzbare Kapazität zusätzlich aus Umgebungsbedingungen gewinnbar ist, und
wobei die Umgebungsbedingung die Außentemperatur ist, und
wobei die Außentemperatur eine jahreszeitlich und/oder tageszeitlich und örtlich vordefinierte, in einem Speicher vorgehaltene Außentemperatur ist, und
wobei die jeweils zu berücksichtigende Außentemperatur mit Hilfe wenigstens einer Datumsangabe und/oder Zeitangabe und Ortsangabe aus dem Speicher entnehmbar ist, und
wobei eine Mehrzahl von prognostizierten Außentemperaturen ortsbezogen und zeitbezogen aus einem Wettervorhersagesystem (8) ermittelbar sind,
wobei die so gewonnenen Außentemperaturen ortsbezogen und zeitbezogen mit der Fahrroute verknüpfbar sind, und
wobei aus diesen verknüpften Daten die Kenngröße ermittelbar ist, und wobei die benötigte nutzbare Kapazität zusätzlich aus wenigstens einem der folgenden Parameter gewonnen wird, nämlich personenbezogener Energie-Mehrverbrauch oder personenbezogener Energie-Minderverbrauch einer Bedienperson, wobei der personenbezogene Energie-Mehrverbrauch oder Energie-Minderverbrauch aus einer vorgelagerten personenbezogenen Verbrauchsanalyse als Kenngröße gewonnen wird.

## Claims

1. Method for charge/discharge control of a high-voltage battery system (5), wherein different usable capacities of the battery of the high-voltage battery system (5) can be adjusted by selecting different SoC windows, wherein
- in a process that is upstream of a charging process, at least one parameter is determined, which parameter predicts a usable capacity (Kₛₒₗₗ) of the battery required until the next charging process,
- the at least one parameter is converted into a required usable capacity (Kₛₒₗₗ),
- using the required usable capacity (Kₛₒₗₗ), a target SoC window (SoC-Fₛₒₗₗ) that optimizes the aging state of the battery is defined such that the target SoC window (SoC-Fₛₒₗₗ) is smaller than a maximum permissible SoC window (SoC-Fₘₐₓ) and is located within the maximum permissible SoC window (SoC-Fₘₐₓ),
- the target SoC window (SoC-Fₛₒₗₗ) is adjusted,
- the battery (5) is charged within the range specified by the target SoC window (SoC-Fₛₒₗₗ),
- the discharging of the battery (5) occurs in the range specified by the target SoC window (SoC-Fₛₒₗₗ),
wherein the required usable capacity is obtained from a predicted task, and
wherein the predicted task is to complete a previously determined travel route of a fully or partially electrically operated vehicle comprising the high-voltage battery system (5),
and
wherein the travel route is determined by means of a route calculation system (7),
wherein the required usable capacity is additionally obtained from environmental conditions, and
wherein the environmental condition is the ambient temperature, and
wherein the ambient temperature is an ambient temperature which is predefined by season and/or time of day and location, and is stored in a memory unit, and
wherein the ambient temperature to be considered in each case is extracted from the memory unit using at least one date and/or time and location, and
wherein a plurality of predicted ambient temperatures are determined from a weather forecast system (8) in a location-based and time-based manner,
wherein the ambient temperatures obtained in this way are linked to the travel route in a location-based and time-based manner, and
wherein the parameter is determined from these linked data, and wherein the required usable capacity is additionally obtained from at least one of the following parameters, specifically a personal energy overconsumption or personal energy underconsumption of an operator, wherein the personal energy overconsumption or energy underconsumption is obtained as a parameter from upstream personal consumption analysis.

2. Method according to claim 1, **characterized in that** the predicted usable capacity required until the next charging process includes a safety reserve.

3. Method according to either of the preceding claims, **characterized in that** the battery (5) is a high-voltage traction battery of the fully or partially electrically operated vehicle, **and in that** the predefined task is to cover a minimum travel distance at a predefined height profile.

4. Method according to claim 3, **characterized in that** each charging process is controlled depending on, among other things, the ambient temperature and the resulting air conditioning demand, such that the driver is always provided with a reliable, fixed/constant range.

5. Method according to claim 3 or 4, **characterized in that** the planning system contains the order of the locations to be traveled to and/or the time of day at which an arrival at at least one location is planned, **and in that** the route calculation system (7) determines a travel route therefrom.

6. Method according to any of the preceding claims, **characterized in that** the at least one parameter is obtained from the evaluation of at least one previous charge-discharge cycle.

7. Arrangement for charge/discharge control for carrying out the method according to any of the preceding claims, wherein the arrangement for charge/discharge control
- contains a determining device (2) which determines at least one parameter, wherein the at least one parameter represents the capacity (Kₛₒₗₗ) of the battery (5) required until the next charging process,
- contains a calculating device (9) which calculates the required capacity (Kₛₒₗₗ) from the parameter,
- contains a defining device (11) which defines an SoC window (SoC-Fₛₒₗₗ) that optimizes the aging state of the battery, such that the target SoC window (SoC-Fₛₒₗₗ) is smaller than a maximum permissible SoC window (SoC-Fₘₐₓ) and is located within the maximum permissible SoC window (SoC-Fₘₐₓ),
- contains an adjusting device which adjusts the SoC window (SoC-Fₛₒₗₗ),
- the battery (5) is charged within the range specified by the target SoC window (SoC-Fₛₒₗₗ),
- the discharging of the battery (5) occurs in the range specified by the target SoC window (SoC-Fₛₒₗₗ),
wherein the required usable capacity is obtained from a predicted task, and
wherein the predicted task is the completion of a previously determined travel route of a fully or partially electrically operated vehicle comprising the high-voltage battery system,
wherein the travel route can be determined by means of a route calculation system (7),
wherein the required usable capacity can additionally be obtained from environmental conditions, and
wherein the environmental condition is the ambient temperature, and
wherein the ambient temperature is an ambient temperature which is predefined by season and/or time of day and location, and is stored in a memory unit, and
wherein the ambient temperature to be considered in each case can be extracted from the memory unit using at least one date and/or time and location, and
wherein a plurality of predicted ambient temperatures can be determined from a weather forecast system (8) in a location-based and time-based manner,
wherein the ambient temperatures obtained in this way can be linked to the travel route in a location-based and time-based manner, and
wherein the parameter can be determined from these linked data, and wherein the required usable capacity is additionally obtained from at least one of the following parameters, specifically a personal energy overconsumption or personal energy underconsumption of an operator, wherein the personal energy overconsumption or energy underconsumption is obtained as a parameter from upstream personal consumption analysis.

## Revendications

1. Procédé de commande de charge/décharge d'un système de batterie haute tension (5), dans lequel différentes capacités utiles de la batterie du système de batterie haute tension (5) peuvent être réglées par différents choix de fenêtres SoC, dans lequel
- dans un processus précédant une recharge, on détermine au moins une grandeur caractéristique qui pronostique une capacité utile (Kₛₒₗₗ) de la batterie nécessaire jusqu'à la prochaine recharge,
- l'au moins une grandeur caractéristique est convertie en une capacité utile nécessaire (Kₛₒₗₗ),
- une fenêtre SoC de consigne (SoC-Fₛₒₗₗ) optimisant l'état de vieillissement de la batterie est déterminée à partir de la capacité utile nécessaire (Kₛₒₗₗ), de telle sorte que la fenêtre SoC de consigne (SoC-Fₛₒₗₗ) est inférieure à une fenêtre SoC maximale admissible (SoC-Fₘₐₓ) et se situe à l'intérieur de la fenêtre SoC maximale admissible (SoC-Fₘₐₓ),
- la fenêtre SoC de consigne (SoC-Fₛₒₗₗ) est réglée,
- la batterie (5) est chargée dans la plage prédéfinie par la fenêtre SoC de consigne (SoC-Fₛₒₗₗ),
- la décharge de la batterie (5) s'effectue dans la plage prédéfinie par la fenêtre SoC de consigne (SoC-Fₛₒₗₗ),
dans lequel la capacité utile nécessaire est obtenue à partir d'une tâche pronostiquée, et
dans lequel la tâche pronostiquée est la maîtrise d'un itinéraire de conduite déterminé à l'avance d'un véhicule fonctionnant de manière entièrement électrique ou partiellement électrique comprenant le système de batterie haute tension (5),
et
dans lequel l'itinéraire de conduite est déterminé au moyen d'un système de calcul d'itinéraire (7),
dans lequel la capacité utile nécessaire est en outre obtenue à partir des conditions ambiantes, et
dans lequel la condition ambiante est la température extérieure, et
dans lequel la température extérieure est une température extérieure prédéfinie en fonction de la saison et/ou du moment de la journée et du lieu et conservée dans une mémoire, et
dans lequel la température extérieure respective à prendre en compte est extraite de la mémoire à l'aide d'au moins une indication de date et/ou une indication d'heure et une indication de lieu, et
dans lequel une pluralité de températures extérieures pronostiquées est déterminée en fonction du lieu et du temps à partir d'un système de prévision météorologique (8),
dans lequel les températures extérieures ainsi obtenues sont associées à l'itinéraire de conduite en fonction du lieu et du temps, et
dans lequel la grandeur caractéristique est déterminée à partir de ces données associées, et dans lequel la capacité utile nécessaire est obtenue en outre à partir d'au moins l'un des paramètres suivants, à savoir la surconsommation d'énergie liée à la personne ou la sous-consommation d'énergie liée à la personne d'un opérateur, dans lequel la surconsommation d'énergie liée à la personne ou la sous-consommation d'énergie liée à la personne est obtenue comme grandeur caractéristique à partir d'une analyse de consommation liée à la personne effectuée en amont.

2. Procédé selon la revendication 1, **caractérisé en ce que** la capacité utile nécessaire pronostiquée jusqu'à la prochaine recharge contient une réserve de sécurité.

3. Procédé selon l'une des revendications précédentes,
**caractérisé en ce que** la batterie (5) est une batterie de traction haute tension du véhicule fonctionnant de manière entièrement électrique ou partiellement électrique, et **en ce que** la tâche prédéfinie est la maîtrise d'une distance de conduite minimale pour un profil d'altitude prédéfini.

4. Procédé selon la revendication 3, **caractérisé en ce que** chaque opération de charge est commandée en fonction, entre autres, des températures extérieures ainsi que des besoins de climatisation qui en résultent, de telle sorte qu'une autonomie fixe/constante fiable est toujours mise à la disposition du conducteur.

5. Procédé selon la revendication 3 ou 4, **caractérisé en ce que** le système de planification contient l'ordre des lieux à desservir et/ou l'heure du jour à laquelle une arrivée à au moins un lieu est prévue, et **en ce que** le système de calcul d'itinéraire (7) détermine un itinéraire de conduite à partir de cela.

6. Procédé selon l'une des revendications précédentes,
**caractérisé en ce que** l'au moins une grandeur caractéristique est obtenue à partir de l'évaluation d'au moins un cycle de charge-décharge précédent.

7. Agencement de commande de charge/décharge pour la réalisation du procédé selon l'une des revendications précédentes, dans lequel l'agencement de commande de charge/décharge
- contient un dispositif de détermination (2) qui détermine au moins une grandeur caractéristique, dans lequel l'au moins une grandeur caractéristique représente la capacité (Kₛₒₗₗ) de la batterie (5) nécessaire jusqu'à la prochaine recharge,
- comprend un dispositif de calcul (9) qui calcule la capacité nécessaire (Kₛₒₗₗ) à partir de la grandeur caractéristique,
- contient un dispositif de détermination (11) qui détermine une fenêtre SoC (SoC-Fₛₒₗₗ) optimisant l'état de vieillissement de la batterie, de telle sorte que la fenêtre SoC de consigne (SoC-Fₛₒₗₗ) est inférieure à une fenêtre SoC maximale admissible (SoC-Fₘₐₓ) et se situe à l'intérieur de la fenêtre SoC maximale admissible (SoC-Fₘₐₓ),
- contient un dispositif de réglage qui règle la fenêtre SoC (SoC-Fₛₒₗₗ),
- la batterie (5) est chargée dans la plage prédéfinie par la fenêtre SoC de consigne (SoC-Fₛₒₗₗ),
- la décharge de la batterie (5) s'effectue dans la plage prédéfinie par la fenêtre SoC de consigne (SoC-Fₛₒₗₗ),
dans lequel la capacité utile nécessaire est obtenue à partir d'une tâche pronostiquée, et
dans lequel la tâche pronostiquée est la maîtrise d'un itinéraire de conduite déterminé à l'avance d'un véhicule fonctionnant de manière entièrement électrique ou partiellement électrique comprenant le système de batterie haute tension,
dans lequel l'itinéraire de conduite peut être déterminé au moyen d'un système de calcul d'itinéraire (7),
dans lequel la capacité utile nécessaire peut en outre être obtenue à partir des conditions ambiantes, et
dans lequel la condition ambiante est la température extérieure, et
dans lequel la température extérieure est une température extérieure prédéfinie en fonction de la saison et/ou du moment de la journée et du lieu et conservée dans une mémoire, et
dans lequel la température extérieure respective à prendre en compte peut être extraite de la mémoire à l'aide d'au moins une indication de date et/ou une indication d'heure et une indication de lieu, et
dans lequel une pluralité de températures extérieures pronostiquées peut être déterminée en fonction du lieu et du temps à partir d'un système de prévision météorologique (8),
dans lequel les températures extérieures ainsi obtenues peuvent être associées à l'itinéraire de conduite en fonction du lieu et du temps, et
dans lequel la grandeur caractéristique peut être déterminée à partir de ces données associées, et dans lequel la capacité utile nécessaire est obtenue en outre à partir d'au moins l'un des paramètres suivants, à savoir la surconsommation d'énergie liée à la personne ou la sous-consommation d'énergie liée à la personne d'un opérateur, dans lequel la surconsommation d'énergie liée à la personne ou la sous-consommation d'énergie liée à la personne est obtenue comme grandeur caractéristique à partir d'une analyse de consommation liée à la personne effectuée en amont.
